# Europäisches Patentamt
## European Patent Office
## Office européen des brevets

(19)

(11) Publication number: **0 090 835**
**B1**

(12) **EUROPEAN PATENT SPECIFICATION**

(45) Date of publication of patent specification: **17.12.86**

(51) Int. Cl.⁴: **B 62 D 27/06, B 62 D 33/02**

(21) Application number: **82903082.4**

(22) Date of filing: **11.10.82**

(86) International application number:
**PCT/SE82/00328**

(87) International publication number:
**WO 83/01420 28.04.83 Gazette 83/10**

(54) **A DETACHABLE STANCHION FOR A LORRY PLATFORM OR THE LIKE.**

(30) Priority: **14.10.81 SE 8106076**

(43) Date of publication of application:
**12.10.83 Bulletin 83/41**

(45) Publication of the grant of the patent:
**17.12.86 Bulletin 86/51**

(84) Designated Contracting States:
**AT BE CH DE FR GB LI NL SE**

(56) References cited:
**DE-A-2 706 063**
**DE-B-1 780 395**
**SE-A-79 022 331**
**SE-B- 328 792**
**SE-B- 379 701**
**SE-C- 121 150**

(73) Proprietor: **SIMME, Sture**
**Maratongatan 39 A**
**S-531 52 Lidköping (SE)**

(72) Inventor: **SIMME, Sture**
**Maratongatan 39 A**
**S-531 52 Lidköping (SE)**

(74) Representative: **Petri, Stellan**
**c/o SAB NIFE AB Box 515**
**S-261 24 Landskrona (SE)**

Courier Press, Leamington Spa, England.

EP 0 090 835 B1

# Description

## Technical Field

The present invention relates to a detachable stanchion for a lorry platform or the like having a locking mechanism arranged in the hollow interior of the stanchion for detachable connection with a flap which can be raised towards the stanchion, one locking mechanism comprising a hinge profile, which at its bottom is pivotally connected to a lower supporting shaft, and a locking profile, which by means of a pivot at its bottom is pivotally attached to the hinge profile and at the top is pivotally connected with a shaft of a member for connection with the flap,

where the overall height of the hinge profile and the locking profile only slightly exceeds the distance between the supporting shaft and the shaft of the connecting member in its connecting position and where, thanks to the intrinsic resilience of the profiles, in the said connection position the section can be made to snap over the line between the two said shafts.

## Background Art

A stanchion design of the type described above is known through GB—A—2 057 558. In this design, from the same source as the present invention, there are two separate sets of locking mechanisms of the same type — one at the bottom for attaching the stanchion to the lorry platform and one at the top for connecting the flaps with the stanchion.

This design, which is advantageous for certain purposes, exhibits certain disadvantages which render it less suitable for more general use.

The fundamental disadvantage is precisely that the design contains two sets of locking mechanisms which, already because of the number of components involved, gives a relatively expensive product. The separate locking mechanism sets also represent a disadvantage from the handling viewpoint, because different devices have to be manipulated when loosening the flaps and releasing the stanchion from the platform. A secondary disadvantage is that the smooth surface of the stanchion is interrupted at two separate places.

## The Invention

These disadvantages are eliminated in accordance with the invention with a stanchion of the type mentioned above, having locking mechanisms for connecting the flap to the stanchion, in that the lower supporting shafts of two adjacent locking mechanisms are arranged on a common link rod, which can move axially in the lengthwise direction of the stanchion and which is connected with means for engaging an upper cradle of a platform attachment, which also has a lower cradle in which a stanchion shaft in the lower portion of the stanchion can rest.

By this means the link shaft can be raised and the stanchion can be released from the platform attachment by manoeuvering the locking mechanisms past a position permitting release of the flap from the stanchion.

In a preferrred embodiment the means for connection with the flap are locking slides which can move axially in the stanchion and have arrangements for interaction with the corresponding elements on the flap. On the inside the stanchion is provided with a stop shoulder, against which the locking slides come to rest in the opening or release position, so that further opening movements of the locking mechanisms result in the lifting of the link rod.

Furthermore in the preferred embodiment a fixed locking pin extends through the stanchion directly above the locking slides in their connection position. This locking pin has a twin function: The entire arrangement in the stanchion can be introduced from the top into the stanchion in the assembled state, and the locking pin is introduced subsequently so as to prevent the arrangement from sliding out when the stanchion is turned. Furthermore the locking pin serves as a detent at the top of the locking slides, if no engagement takes place with the flap during the closing of the locking mechanisms.

Each locking slide has preferably a recess, where the stanchion has a corresponding recess for the clamping of a flap pin.

In the preferred embodiment the link rod is connected with a yoke which at the bottom is provided with a transverse yoke shaft for interaction with the upper cradle via a resilient member, preferably a rubber block. The main object of this rubber block is to provide elastic clamping of the said yoke shaft in the upper cradle of the platform attachment.

Since the axial positon of the rubber block relative to the link rod can be adjusted by means of a screw and nut arrangement, it is possible to compensate for slight differences in length and to provide the desired clamping force.

The requisite TIR locking of the arrangement can be provided quite simply in that the link rod and the short side walls of the stanchion are provided with holes for a locking cable for the locking mechanisms. The locking cable effectively prevents actuation of the locking mechanisms.

## Brief Description of the Drawings

The invention will be described in greater detail below reference being made to the appended drawings, in which Fig. 1 is an "X-ray picture" of a stanchion in accordance with the invention with the left hand locking mechanisms closed and the right one open, Figs. 2 and 3 provide a side view and a front view respectively, partially in section, of the same stanchion, Fig. 4 is a perspective view which illustrates how the stanchion is attached to a platform, whilst Fig. 5 in a front view illustrates a raised stanchion attached to a platform with a raised flap on the right hand side.

## Description of a Preferred Embodiment

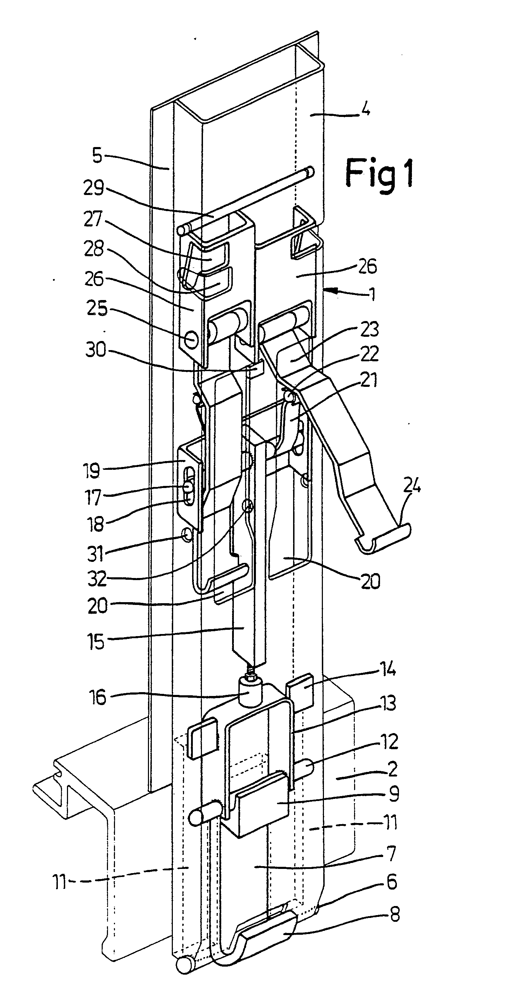

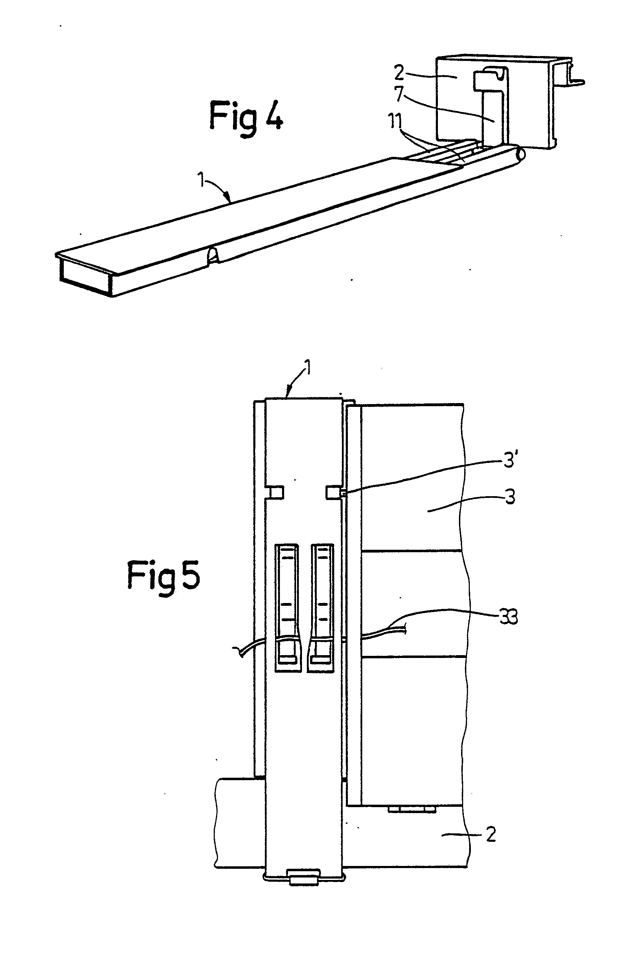

Reference should be made first to Fig. 5 which generally illustrates a vertical stanchion 1 attached to a horizontal lorry platform 2. On its right hand side the stanchion 1 has a raised flap 3, which at the bottom is hinge-connected to the platform 2 and rests against a flange on the stanchion. In Figs. 1 and 4 the platform 2 is represented by a short segment of a platform edge profile.

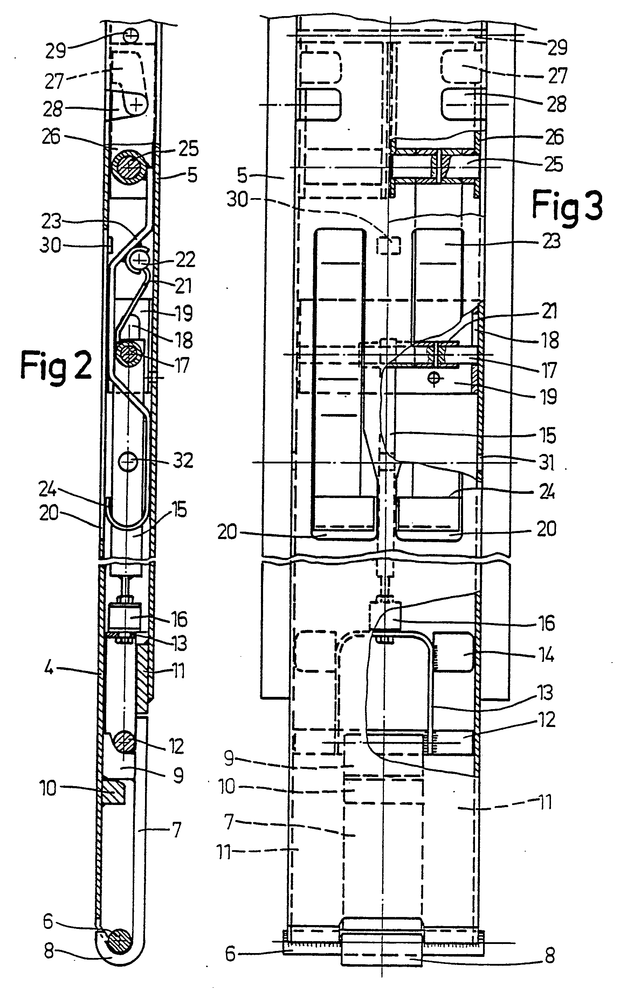

In the following reference will be made mainly to Figs. 1—3 which complement each other so as to ensure full understanding of the construction. Here Figs. 2 and 3 are a side view and front view respectively of normal type, whilst Fig. 1 is a perspective "X-ray picture" where the actual stanchion and the platform are drawn with thinner lines, whereas structural details inside the stanchion are drawn with heavier lines. Not all the reference numbers are provided in all these three Figures (and naturally not in the remaining two perspicuous Figures).

The actual stanchion 1 is fundamentally constructed from a U-shaped profile 4 and a rear plate 5 which merely extends above the platform 2 in the raised position of the stanchion. The said flanges for the flaps 3 are formed by this rear plate 5.

At the bottom the stanchion 1 is provided with a welded on stanchion shaft 6 for interaction with a platform attachment 7 which is attached to the platform 2 (see also Fig. 4), more specifically a lower cradle 8 thereon. The platform attachment 7 also has an upper cradle 9 for a purpose which will be described later. On the inside the profile 4 and have a shoulder 10 which, (when the stanchion 1 is almost raised) as a result of its interaction with the underside of the upper cradle 9, prevents the stanchion shaft 6 from leaving its lower cradle 8.

Finally the stanchion 1 at the bottom (where the rear plate 5 terminates) has a U-shaped reinforcing plate 11, welded to plate 5, the web of which is illustrated in Fig. 2 with the legs shown in Figs. 1 and 4. The stanchion shaft 6 is also welded to these legs. A yoke shaft 12 for interaction with the upper cradle 9 in a manner to be described below is attached to a yoke 13 which by means of welded wings 14 is guided for reciprocating motion in the stanchion 1.

A link rod 15 is (without metallic contact) connected with the yoke 13 via a rubber block 16, the object of which is to provide resilience and to facilitate slight relative movements between the yoke and link rod so that a suitable clamping force is achieved. It can be seen, especially from Fig. 1, that a certain lengthwise adjustment capability is provided by attaching the rubber block 16 by means of screws and nuts.

At its upper end the link rod 15 is provided with a transverse link rod shaft 17, the ends of which are guided for restricted movement in the lengthwise direction of the stanchion by slots 18 in a U-shaped attachment 19 which is bolted firmly to the rear stanchion plate 5.

As the link rod 15, as can be seen, is located centrally in the stanchion 1, the link rod shaft 17 extends outwards on either side thereof. A locking mechanism, which will be described in more detail below, is pivotally attached to each of these shaft ends 17. The left hand locking mechanism illustrated in Fig. 1 is shown in the locked or closed position and the right hand one in the open position, whilst both mechanisms are illustrated in the locked position in Figs. 2, 3 and 5. Both mechanisms are identical, and for the sake of clarity only one has been provided with reference numbers in the Figures. On the front side of the stanchion profile 4 there are two elongated apertures 20 for the locking mechanisms.

Each locking mechanism comprises a hinge profile 21 which is pivotally connected at its lower end with the link rod shaft 17 and at its upper end by means of a pivot 22 with a locking profile 23.

This locking profile 23 also continues downwards from the pivot 22 past the hinge profile 21 and forms a handle section 24. It is shown clearly in Fig. 1 that the handle section 24, with the locking mechanism in the open position (to the right in the Figure), extends beyond the stanchion so that it is easily accessible. At the top the locking profile is pivotally connected with a shaft 25 in a locking slide 26 which can move to and fro in the stanchion 4, 5. On the sides which face the front and short sides of the stanchion, this slide is provided with a recess 27 having a special shape, the purpose of which will be described below. Similarly, the front and short sides of the stanchion 4, 5 are provided with a corresponding, but straight recess 28.

A fixed locking pin 29 extends through the stanchion 4, 5. One purpose for this is to prevent the described arrangement from leaving the stanchion when the latter is raised and lowered. One of the advantages of the construction described is namely that all component parts, in the assembled state, can easily be introduced through the upper end of the stanchion, in the Fig. 1 position, whereupon a fixed point for the construction is achieved in that the attachment 19 is bolted or welded firmly to the rear wall 5 of the stanchion.

The U-profile 4 of the stanchion is centrally on the inside, below the locking slides 26, provided with a stop shoulder 30, which is bolted or welded on and the object of which is to restrict the downward movement of the locking slides to the open position (to the right in Fig. 1) in order to achieve a function which will be described below.

The short sides of the stanchions 4, 5 are provided with holes 31, and the link rod 15 has a corresponding hole 32. A TIR cable 36, the object of which is to prevent unauthorised opening of the locking mechanisms and thus facilitate customs examinations at frontiers, can be pulled through these holes 31, 32 and is illustrated in Fig. 5. With the locking mechanisms in the closed position and with a TIR cable 33 tied through the holes 31, 32 this of course effectively prevents any attempt to open the locking mechanisms.

The stanchion construction described above has the following function (attention is drawn particularly to Fig. 1 which provides a very clear illustration of the function):

The starting position is that shown in Fig. 1 with the vertical stanchion 1 attached to the platform edge 2 and with the left locking mechanism closed and the right one open.

In the right hand locking mechanism the handle section 24 and the locking profile 23 are pulled outwards, and thus the locking slide 26 is drawn downwards so that the recesses 27 and 28 coincide as shown in Fig. 1. A pin 3', which is merely suggested in Fig. 5 on the short side of the flap 3, can now be introduced from the front into these coincident recesses. When the handle section 24 is subsequently pushed in towards the stanchion, the locking slide 26 is pushed upwards, whilst the shaft 17 is fixed thanks to the closed left hand locking mechanism. Finally the same position is reached on the right, as is illustrated on the left, whereby the flap pins 3' are well clamped in the now only small coincident portions of the two recesses 27 and 28.

As a result of the oblique shaping of the recess 27 in the locking slide 26 on the short face of the stanchion, the flap pins 3' and thus the flaps are pressed against the flange 5 with ever increasing force during the described closure of the locking mechanism.

The overall length of the hinge profile 21 and locking profile 23 (over the pivot 22, Fig. 2) is somewhat greater than the distance between the centres of the shafts 17 and 25. Because the material in these profiles is slightly resilient and thanks to the shaping of the profiles, at the end of the locking operation described above the pivot 22 can snap over the imaginary connecting line between the shafts 17 and 25 to a safe locking position as shown in Fig. 2, from which release can take place only if quite a considerable pull is exerted on the handle section 24.

It should be pointed out here that the locking pin 29 is so located that the locking slides 26 receive support against it at the top and the said snap locking effect is achieved even if there is no flap pin 3' in the recesses 27, 28.

Naturally the opening procedure is the reverse: the handle section 24 is pulled out with sufficient force to enable the pivot 22 to snap back across the connecting line between the shafts 17 and 25 and then further outwards and upwards so that the locking slide 26 is pulled down to the position illustrated to the right in Fig. 1, where the two recesses 27 and 28 are located over each other in such a way that the flap pin 3' and thus the flap 3 can be released from the stanchion 1.

So far reference has been made solely to one locking mechanism at a time being actuated, which means that the shaft 17 can be regarded as stationary, like the link rod 15 (and the components 12, 13 and 16 connected therewith) and hence that the attachment of the stanchion 1 to the platform edge 2 remains unaffected.

If however both locking mechanisms are open, by moving either or both the handle sections 24 further upwards, so that either or both the locking slides 26 come to rest against the detent shoulder 30, it is possible to raise the shaft 17, the link rod 15 and the yoke 13 with the yoke shaft 12 so that this is freed from the upper cradle 9 on the platform edge 2, and the stanchion 1 can thus be lowered or lifted out from the lower cradle 8.

Naturally the reverse procedure is executed by clamping the stanchion 1 to the platform edge 2, so that either or both the locking slides 26 slide upward and rest against the locking pin 29.

A description has been given above of a TIR lock for handle sections 24 and the link rod 15. For example, if a TIR lock is required at a higher position, this can (as a modification) be provided for the locking slides 26.

## Claims

1. A detachable stanchion (1) on a lorry platform or the like having a locking mechanism arranged in the hollow interior of the stanchion for detachable connection with a flap (3) which can be raised towards the stanchion, one locking mechanism comprising a hinge profile (21), which at its bottom is pivotally connected to a lower supporting shaft (17), and a locking profile (23), which by means of a pivot (22) at its bottom is pivotally attached to the hinge profile and at the top is pivotally connected with the shaft (25) of a member (26) for connection with the flap,

where the overall height of the hinge profile and locking profile only slightly exceeds the distance between the supporting shaft (17) and the shaft (25) of the connecting member (26) in its connection position and where, thanks to the intrinsic resilience of the profiles, the pivot (22) in the said connection position can be made to snap over the line between the two said shafts (17, 25),

characterized in that the lower supporting shafts (17) of two adjacent locking mechanisms are arranged on a common link rod (15), which can move axially in the lengthwise direction of the stanchion (1) and is connected with means (12—14) for engaging with an upper cradle (9) on a platform attachment (7), which also has a lower cradle (8), in which a stanchion shaft (6) in the lower portion of the stanchion can rest.

2. A stanchion according to claim 1, in which the means for connection with the flap (3) are formed by locking slides (26) which can move axially in the stanchion (1) and have arrangements (27) for interacting with corresponding elements (3') on the flap, characterized in that the stanchion (1) on the inside is provided with a stop shoulder (30) against which the locking slides (26) come to rest in an opening position.

3. A stanchion according to claims 1 and 2, characterized in that a fixed locking pin (29) or the like extends through the stanchion (1) directly above the locking slides (26) in their connection position.

4. A stanchion according to any of the preceding claims, characterized in that each locking slide (26) has a recess (27) and the stanchion has a corresponding recess (28) for clamping a flap pin (3').

5. A stanchion according to any of the preceding claims, characterized in that the link rod (15) is connected with a yoke (13) which at the bottom is provided with a transverse yoke shaft (12) for interaction with the upper cradle (9) via a resilient element (16), preferably a rubber block.

6. A stanchion according to any of the preceding claims, characterized in that the axial position of the rubber block (16) relative to the link rod (15) can be adjusted by means of a screw and nut arrangement.

7. A stanchion according to any of the preceding claims, characterized in that the link rod (15) and the short side walls of the stanchion (1) are provided with holes (32 and 31 respectively) for a locking cable (33) for the locking mechanisms.

## Revendications

1. Rancher amovible (1) sur plate-forme de camion ou analogue, comportant un mécanisme de verrouillage agencé dans l'intérieur creux du rancher afin d'être relié de façon amovible à une ridelle (3) qui peut être relevée vers le rancher, un mécanisme de verrouillage comprenant un profil (21) d'articulation dont la partie inférieure est reliée par pivotement à un axe inférieur (17) de support, et un profilé (23) de verrouillage qui, au moyen d'un pivot (22) situé à sa partie inférieure, est relié de façon pivotante au profilé d'articulation et, à sa partie supérieure, est relié de façon pivotante à l'axe (25) d'un élément (26) destiné à être relié à la ridelle,

où la hauteur globale du profilé d'articulation et du profilé de verrouillage ne dépasse que légèrement la distance comprise entre l'axe (17) de support et l'axe (25) de l'élément (26) de liaison dans sa position de liaison et où, grâce à l'élasticité intrinsèque des profilés, le pivot (22), dans ladite position de liaison, peut être déplacé brusquement et élastiquement au-delà de la ligne comprise entre lesdits deux axes (17, 25),

caractérisé en ce que les axes inférieurs (17) de support de deux mécanismes de verrouillage adjacents sont disposés sur une tringle commune (15) qui peut se déplacer axialement dans la direction longitudinale du rancher (1) et qui est reliée à des moyens (12—14) destinés à s'enclencher avec un berceau supérieur (9) situé sur un élément (7) de la plate-forme, qui comporte également un berceau inférieur (8) dans lequel un axe (6) du rancher, situé à la partie inférieure du rancher, peut se loger.

2. Rancher selon la revendication 1, dans lequel les moyens de liaison avec la ridelle (3) sont formés par des curseurs (26) de verrouillage qui peuvent se déplacer axialement dans le rancher (1) et possèdent des agencements (27) destinés à coopérer avec des éléments correspondants (3') portés par la ridelle, caractérisé en ce que le rancher (1) comporte, à l'intérieur, un épaulement (30) de butée contre lequel viennent reposer les curseurs (26) de verrouillage en position d'ouverture.

3. Rancher selon les revendications 1 et 2, caractérisé en ce qu'une goupille fixe (29) de verrouillage ou analogue s'étend à travers le rancher (1) directement au-dessus des curseurs (26) de verrouillage dans leur position de liaison.

4. Rancher selon l'une quelconque des revendications précédentes, caractérisé en ce que chaque curseur (26) de verrouillage présente un évidement (27) et en ce que le rancher présente un évidement correspondant (28) pour le bridage d'une goupille (3') de ridelle.

5. Rancher selon l'une quelconque des revendications précédentes, caractérisé en ce que la tringle (15) est reliée à un étrier (13) qui comporte, à sa partie inférieure, un axe transversal (12) destiné à coopérer avec le berceau supérieur (9) par l'intermédiaire d'un élément élastique (16), avantageusement un bloc de caoutchouc.

6. Rancher selon l'une quelconque des revendications précédentes, caractérisé en ce que la position axiale du bloc (16) de caoutchouc par rapport à la tringle (15) peut être ajustée au moyen d'un agencement à vis et écrou.

7. Rancher selon l'une quelconque des revendications précédentes, caractérisé en ce que la tringle (15) et les parois latérales courtes du rancher (1) présentent des trous (32 et 31, respectivement) pour un câble (33) de verrouillage des mécanismes de verrouillage.

## Patentansprüche

1. Abnehmbarer Ständer (1) auf einer Lastwagenplattform oder ähnlichem mit einem Verriegelungsmechanismus, der im hohlen Inneren des Ständers zur lösbaren Verbindung mit einer Klappe (3) angeordnet ist, die zum Ständer hochgeklappt werden kann, wobei ein Verriegelungsmechanismus ein Scharnierprofilteil (21), das an seinem unteren Abschnitt schwenkbar mit einer unteren Halteachse (17) verbunden ist, und ein Verriegelungsprofilteil (23) umfaßt, das über einen Drehstift (22) an seinem unteren Abschnitt schwenkbar am Scharnierprofilteil angebracht ist und am oberen Abschnitt schwenkbar mit der Achse (25) eines Elementes (26) zur Verbindung mit der Klappe verbunden ist, wobei die Gesamthöhe des Scharnierprofilteils und des Verriegelungsprofilteils den Abstand zwischen der Halteachse (17) und der Achse (25) des Verindungselementes (26) in seiner Verbindungsposition nur etwas überschreitet und dank der Eigenelastizität der Profilteile der Drehstift (22) in der Verbindungsposition dazu gebracht werden kann, über die Linie zwischen den beiden Achsen (17, 25) zu schnappen, dadurch gekennzeichnet, daß die unteren Halteachsen (17) von zwei nebeneinander angeordneten Verriegelungsmechanismen an einer gemeinsamen Verbindungsstange (15) angeordnet sind, die sich axial in Längsrichtung des Ständers (1) bewegen kann und mit Einrichtungen (12—14) zur Ineingriffnahme mit einem oberen Sattel (9) an einer Plattformhalterung (7) verbunden ist, die auch einen unteren Sattel (8) aufweist, in dem eine Ständerachse (6) im unteren Teil des Ständers sitzen kann.

2. Ständer nach Anspruch 1, bei dem die Einrichtungen zur Verbindung mit der Klappe (3) von Verriegelungsgleitstücken (2) gebildet sind, die sich axial im Ständer (1) bewegen können und Ausbildungen (27) zum Wechselwirken mit entsprechenden Elementen (3') an der Klappe aufweisen, dadurch gekennzeichnet, daß der Ständer (1) an der Innenseite mit einer Anschlagschulter (30) versehen ist, an der die Verriegelungsgleitstücke (26) in einer Öffnungsposition zur Anlage kommen.

3. Ständer nach Anspruch 1 und 2, dadurch gekennzeichnet, daß ein fester Verriegelungsstift (29) oder änliches durch den Ständer (1) direkt über den Verriegelungsgleitstücken (26) in ihrer Verbindungsposition verläuft.

4. Ständer nach einem der vorhergehenden Ansprüche, dadurch gekennzeichnet, daß jedes Verriegelungsgleitstück (26) ein Aussparung (27) aufweist und der Ständer eine entsprechende Aussparung (28) zum Einklemmen eines Klappenstiftes (3') aufweist.

5. Ständer nach einem der vorhergehenden Ansprüche, dadurch gekennzeichnet, daß die Verbindungsstange (15) mit einem Joch (13) verbunden ist, das am unteren Abschnitt mit einer quer verlaufenden Jochachse (12) zum Wechselwirken mit dem oberen Sattel (19) über ein elastisches Element (16), vorzugsweise einen Gummiblock, versehen ist.

6. Ständer nach einem der vorhergehenden Ansprüche, dadurch gekennzeichnet, daß die axiale Position des Gummiblocks (16) relativ zur Verbindungsstange (15) über eine Schrauben- und Mutteranordnung eingestellt werden kann.

7. Ständer nach einem der vorhergehenden Ansprüche dadurch gekennzeichnet, daß die Verbindungsstange (15) und die kurzen Seitenwände des Ständers (1) mit Löchern (32) und (31) jeweils für ein Verriegelungskabel (33) für den Verriegelungsmechanismus versehen sind.

0 090 835

Fig 1

1

Fig 2

Fig 3

Fig 4

2
7
11

1

Fig 5

1

3'
3

33

2